# EUROPEAN PATENT SPECIFICATION

(11) **EP 2 095 706 B1**
(45) Date of publication and mention of the grant of the patent: **17.02.2010**
(21) Application number: 08003521.5
(22) Date of filing: 27.02.2008
(51) Int. Cl.: A01G 9/22, G08B 17/06

(54) **Screening installation**
Screeninganlage
Installation de criblage

(43) Date of publication of application: 02.09.2009
(73) Proprietor: Bonar Technical Fabrics N.V., 9240 Zele (BE)
(72) Inventor: Swennen, Ives Jean Jenny Ghislain, 9850 Hansbeke (BE); Coen Kris Luc Rob, 9340 Lede (BE)
(74) Representative: Oberlein, Gerriet H. R.

(56) References cited:
- EP-A- 1 790 213

## Description

The present invention pertains to a screening installation capable to detect fire in greenhouses.

In greenhouses screening installations are used, which control the climate and decrease the energy consumption. Such screening installations are designed to compact the screening fabrics, when their function is unwanted and to unfold the screening fabrics, when a positive effect on energy consumption is desired.

Known screening installations consist of screening fabrics, which are placed on a bed of wires perpendicular on the length direction of the screening fabrics. These, in general polyester or polyamide wires, support the screening fabrics in both the compacted as in the unfolded state. The movement of the screening fabrics is generated by an electronically controlled electrical engine. At a proximate distance of 3 cm to 15 cm above said support wires another set of wires is placed to prevent large movements of the screening fabrics caused for example by draft.

Such a screening installation is described in EP 1790213.

Over the last decades an increase of the amount of electrical apparatuses and grow light systems could be observed in greenhouses, which contribute to an adverse effect on fire safety. In most cases theses electrical apparatuses and grow light systems are the primary cause of fire. The total damage of the fire is related to the spreading of the fire over large areas, sometimes over the total greenhouse. Said spreading of the fire is mainly caused by the screening fabrics.

To overcome this problem flame retarding screening fabrics are applied. However, flame retardancy implies undesired changes in some important properties of the screening fabrics: Beside an increase in price, the screening fabrics become heavier and less flexible. This results in a less dense package formation. This in turn generates a higher amount of shade formation, which directly influences plant grow and crop yield in an undesired manner. Additionally, the use of the intrinsic environmentally unfriendly flame-retardants used in the production of the flame retarding screening fabrics generates large amounts of dangerous and irritating fumes when exposed to fire.

Fire detection systems are known. They prevent the spreading of flames by triggering counteracting actions, for example closing the windows to suppress the supply of oxygen, shutting down the ventilation system, activating the sprinkler installation for a cooling effect and alert the responsible person by any means.

Especially in greenhouses, wherein the single screening fabrics exhibit areas of e.g. 5m•100m, a very important counteraction triggered by a fire detection system would be a feasible manner to compact the screening fabrics thereby generating an intermediate space between said fabrics and preventing the fire to spread from one screening fabric to another one. However, greenhouses with their high ceilings and ventilation systems require a density of point detection smoke detectors, which is too high and therefore, not feasible. In addition every material, which is placed above the plants, creates shades resulting in decreasing growing yields of the plants. Beam smoke detectors do not have this adverse shadowing effect, because they are placed on the sides of the greenhouse. If the signal between source and reflector is disturbed by smoke, signalling can occur. However, as a consequence of the large distance between the sides of a greenhouse the beam smoke detector system has to be mounted into a very stable structure, which does not exist in a greenhouse. As a consequence until now, it was not possible to provide a feasible fire detection system in greenhouses.

Therefore, the problem underlying the present invention is to provide a feasible fire detection system in greenhouses.

This problem is solved by a screening installation capable to detect fire in greenhouses, wherein the screening installation comprises
(1) at least one screening fabric exhibiting an upper side and a rear side,
(2) a first set of polymeric or metallic wires arranged proximate to the upper side of the at least one screening fabric and preventing said fabric from displacement and optionally
(3) a second set of polymeric or metallic wires placed on the rear side of the at least one screening fabric and supporting said fabric
wherein
(i) at least in the first set of polymeric or metallic wires at least one of said wires is replaced by a linear heat detection wire
   and/or
(ii) at least the first set of polymeric or metallic wires is supplemented with at least one linear heat detection wire.

Surprisingly the screening installation according to the present invention provides a fire detection system in greenhouses simply by the inventive implementation of heat detection wires, which either replace or supplement the polymeric or metallic wires in the first and/or second set of threads. In the case of fire the heat detection wire(s) generate a short circuit electrical current, which in turn triggers counteracting actions as described in the introductory paragraphs and thereby minimizes the destroying effect of a fire. The heat detection wire(s) used in the screening installation of the present invention have a small diameter in the range of 1.5 mm to 5 mm, which is very similar to the approximately 2 mm diameter of the polymeric or metallic wires of the first and second set. Therefore, the heat detection wires do not add a significant shadowing effect for the plants. Furthermore, it is very easy to replace and/or to supplement the polymeric and metallic wires by the heat detecting wires. Consequently the screening installation of the present invention provides a feasible fire detection system in greenhouses.

Within the scope of the present invention "screening fabric" means any textile structure capable to screen a greenhouse, i.e. to control its climate and to decrease its energy consumption. Suitable examples for a screening fabric include any woven fabric, e.g. of plain weave, or any knitted fabric. Said for example woven or knitted fabric may comprise a yarn system or multifilament system and polymer tapes, which may be transparent, or polymeric tapes, which may be light and/or heat reflective or polymeric tapes, which may be light and/or heat absorbing, like tapes of black colour.

Within the scope of the present invention "polymeric wires" means synthetic monofilaments or wires consisting of filaments, or consisting of staple fibers spun from a natural or from a synthetic polymer.

Examples for wires consisting of fibers or staple fibers of natural polymers are fibers spun from cotton, sisal, manila, henequen, jute and hemp.

Examples for wires consisting of monofilament or staple fibers of synthetic polymers are fibers spun from polyester, e.g. from polyethylene terephthalate or polyamide, or polypropylene, or polyethylene, or polyacrylnitril (acrylic fibers).

Examples for metallic wires are wires manufactured from steel or stainless steel or galvanized steel or coated steel, e.g. powder coated or plastic coated steel.

According to the present inventions alternative (i) of the screening installation at least in the first set of polymeric or metallic wires at least one of said wires is replaced by a linear heat detection wire. That means, that one, two or more of the polymeric or metallic wires are replaced by the corresponding number of linear heat detection wires. If polymeric or metallic fibers of the second set are replaced by the heat detection wires, said replacing heat detection wires support the screening fabric, i.e. said heat detection fibers are attached to the screening fabric. The polymeric or metallic wires run perpendicularly and/or parallel to the length direction of the screening fabric. Consequently the same is the case for the substituted heat detection wires. Preferably said heat detection wires are distributed equidistant along the length direction of the fabric.

According to the present inventions alternative (ii) of the screening installation at least the first set of polymeric or metallic wires is supplemented with at least one linear heat detection wire. That means, that the polymeric or metallic wires are supplemented with one, two or more of the linear heat detection wires, which may run perpendicularly and/or parallel to the length direction of the screening fabric. If polymeric or metallic fibers of the second set are supplemented by the heat detection wires, said supplementing heat detection wires support the screening fabric, i.e. said heat detection fibers are attached to the screening fabric. Preferably, also said supplemented heat detection wires are distributed equidistant along the length direction of the fabric.

Within the scope of the present inventions screening system alternative (i) comprises an
- embodiment (i)(a), wherein merely in the first set of polymeric or metallic wires at least one of said wires is replaced by a linear heat detection wire,
- embodiment (i)(b), wherein merely in the second set of polymeric or metallic wires at least one of said wires is replaced by a linear heat detection wire and
- embodiment (i)(c), wherein in the first and in the second set of polymeric or metallic wires at least one of said wires is replaced by a linear heat detection wire.

Within the scope of the present inventions screening system alternative (ii) comprises an
- embodiment (ii)(a), wherein merely the first set of polymeric or metallic wires is supplemented with at least one linear heat detection wire,
- embodiment (ii)(b), wherein merely the second set of polymeric or metallic wires is supplemented with at least one linear heat detection wire and
- embodiment (ii)(c), wherein the first and the second set of polymeric or metallic wires is supplemented with at least one linear heat detection wire.

Furthermore, the scope of the screening system according to the present invention comprises embodiments, wherein both embodiment (i) and embodiment (ii) are realized. Such embodiments are characterized in that
- at least any one or any two or all of the embodiments (i)(a), (i)(b) and (i)(c) and
- at least any one or any two or all of the embodiments (ii)(a), (ii)(b) and (ii)(c) are realized in the screening installation of the present invention.

Optionally, the screening installation comprises at least one heat detection wire arranged above the first set of polymeric or metallic wires,

According to this optional embodiment of the invention's screening installation; said at least one heat detection wire may run parallel or perpendicular or at any desired angle to the length direction of the screening fabric.

In another preferred embodiment of the present inventions screening system at least the first set of polymeric wires comprises at least two linear heat detection wires and the distance between vicinal linear heat detection wires is preferably in the range from 1 m to 200 m and most preferably in the range from 1 m to 50 m.

In still another preferred embodiment of the present inventions screening system each of the linear heat detection wires comprise two twisted electrically conductive cables insulated by a polymer, which has a melting point Tₘ > 80 °C and even more preferably just above the decomposition temperature of the screening fabric, which in many cases is around 100 °C.

The electrically conductive cables of the linear heat detection wires may consist of any electrically conductive material, e.g. of one of the known electrically conducting polymers, or of a metal wire, e.g. manufactured from steel. The insulated electrically conductive cables, i.e. the detection cables, are twisted together to impose a permanent spring pressure between them. In the case of fire or when the temperature near the linear heat detection wire rises above the melting point of the insulating polymer, said polymer melts and a short circuit occurs, which can trigger counter actions as described in the introductory paragraphs.

Linear heat detection wires comprising electrically conductive steel cables can be obtained e.g. from Protectowire Co., Inc. (USA).

Consequently, those, which are skilled in the art and know the present inventions screening installation immediately recognize, that said screening installation comprises a multitude of embodiments, from which they can choose that one, which is tailor-made for the structural conditions of a certain greenhouse, which has to be provided with a screening installation capable to detect fire.

## Claims

1. A screening installation capable to detect fire in greenhouses, wherein the screening installation comprises
(1) at least one screening fabric exhibiting an upper side and a rear side,
(2) a first set of polymeric or metallic wires arranged proximate to the upper side of the at least one screening fabric and preventing said fabric from displacement and optionally
(3) a second set of polymeric or metallic wires, placed on the rear side of the at least one screening fabric and supporting said fabric
**characterized in that** the installation further comprises:
(i) at least in the first set of polymeric or metallic wires at least one of said wires is replaced by a linear heat detection wire
and/or
(ii) at least the first set of polymeric or metallic wires is supplemented with at least one linear heat detection wire.

2. Screening installation according to claim 1, wherein at least the first set of polymeric wires comprises at least two linear heat detection wires and wherein the distance between vicinal linear heat detection wires is in the range from 1 m to 200 m.

3. Screening installation according to claim 1 or 2, wherein each of the linear heat detection wires comprise two twisted electrically conductive cables insulated by a polymer, which has a melting point Tₘ > 80 °C.

4. Screening installation according to claim 1, wherein at least one heat detection wire is arranged above the first set of polymeric or metallic wires.

## Patentansprüche

1. Abschirmeinrichtung, die einen Brand in Gewächshäusern erkennen kann, wobei die Abschirmeinrichtung Folgendes umfasst:
(1) mindestens ein Abschirmgewebe, das eine Oberseite und eine Rückseite aufweist,
(2) eine erste Gruppe von Polymer- oder Metalldrähten, die nahe der Oberseite des mindestens einen Abschirmgewebes angeordnet ist und verhindert, dass sich das Gewebe verschiebt, und optional
(3) eine zweite Gruppe von Polymer- oder Metalldrähten, die auf der Rückseite des mindestens einen Abschirmgewebes platziert ist und das Gewebe hält,
**dadurch gekennzeichnet, dass** die Einrichtung ferner Folgendes umfasst:
(i) zumindest in der ersten Gruppe von Polymer- oder Metalldrähten ist mindestens einer der Drähte durch einen linearen Wärmemeldedraht ersetzt,
und/oder
(ii) zumindest die erste Gruppe von Polymer- oder Metalldrähten ist durch mindestens einen linearen Wärmemeldedraht ergänzt.

2. Abschirmeinrichtung nach Anspruch 1, bei welcher zumindest die erste Gruppe von Polymerdrähten mindestens zwei lineare Wärmemeldedrähte umfasst und bei welcher der Abstand zwischen benachbarten linearen Wärmemeldedrähten im Bereich von 1 m bis 200 m liegt.

3. Abschirmeinrichtung nach Anspruch 1 oder 2, bei welcher jeder der linearen Wärmemeldedrähte zwei verdrillte elektrisch leitfähige Kabel umfasst, die durch ein Polymer mit einem Schmelzpunkt Tₘ > 80 °C isoliert sind.

4. Abschirmeinrichtung nach Anspruch 1, bei welcher zumindest ein Wärmemeldedraht über der ersten Gruppe von Polymer- oder Metalldrähten angeordnet ist.

## Revendications

1. Installation de criblage capable de détecter les incendies dans les serres, l'installation de criblage comprenant :
(1) au moins une toile de criblage présentant un côté supérieur et un côté arrière,
(2) un premier ensemble de fils polymères ou métalliques placés à proximité du côté supérieur de ladite toile de criblage et empêchant le mouvement de ladite toile et éventuellement
(3) un deuxième ensemble de fils polymères ou métalliques, placés sur le côté arrière de ladite au moins une toile de criblage et supportant ladite toile,
**caractérisée en ce que** l'installation comprend en outre :
(i) au moins dans le premier ensemble de fils polymères ou métalliques au moins l'un desdits fils est remplacé par un fil de détection de chaleur linéaire,
et/ou
(ii) au moins le premier ensemble de fils polymères ou métalliques est augmenté d'au moins un fil de détection de chaleur linéaire.

2. Installation de criblage selon la revendication 1, dans laquelle au moins le premier ensemble de fils polymères comprend au moins deux fils de détection de chaleur linéaires et dans laquelle la distance entre les fils de détection de chaleur linéaires voisins est comprise dans l'intervalle de 1 m à 200 m.

3. Installation de criblage selon la revendication 1 ou 2, dans laquelle chacun des fils de détection de chaleur linéaires comprend deux câbles électriquement conducteurs torsadés et isolés par un polymère, qui a un point de fusion Tₘ > 80 °C.

4. Installation de criblage selon la revendication 1, dans laquelle au moins un fil de détection de chaleur est placé au-dessus du premier ensemble de fils polymères ou métalliques.
